# EUROPÄISCHE PATENTANMELDUNG

(11) **EP 1 346 881 A2**
(43) Veröffentlichungstag der Anmeldung: **24.09.2003**
(21) Anmeldenummer: 03003020.9
(22) Anmeldetag: 12.02.2003
(51) Int. Cl.: B60R 16/02, G06F 9/445, H04L 29/06

(54) **Verfahren und Vorrichtung zum Übernehmen von Daten**

(30) Priorität: 23.03.2002 DE 10213165
(71) Anmelder: DaimlerChrysler AG, 70567 Stuttgart (DE)
(72) Erfinder: Fritz, Andreas, 74395 Mundelsheim (DE); Oeffinger, Bernd, 70734 Fellbach (DE); Sorg, Michael, 50226 Frechen (DE)

(57) **Zusammenfassung**

Vorgeschlagen wird ein Verfahren zum Übernehmen von Programmdaten durch ein Steuergerät (50) in einem Kraftfahrzeug, wobei die Programmdaten von einer Datenübergabestelle (9) bereit gestellt werden, mit den Schritten, Abgeben einer Programmdatenübernahmeanfrage an das Steuergerät (50), Übergehen des Steuergerätes in einen Programmdatenübernahmezustand, Übertragen der Programmdaten an das Steuergerät (50) und Übernehmen der Programmdaten durch das Steuergerät (50), wobei vor dem Übergehen des Steuergerätes (50) in den Programmdatenübernahmezustand, von dem Steuergerät (50) geprüft wird, ob für das Steuergerät vorgegebene Programmdatenübernahmesituationen (31-35) bestehen. Das Verfahren eignet sich insbesondere zum Flashen von Steuergerätesoftware in Kraftfahrzeugen.

## Beschreibung

Die Erfindung betrifft ein Verfahren und eine Vorrichtung zum Übernehmen von Daten (Software-Download) durch ein Steuergerät, insbesondere ein Steuergerät in einem Kraftfahrzeug, wobei der sichere Betrieb des Fahrzeuges gewährleistet werden soll. Das Übernehmen von Programmdaten durch ein Steuergerät wird auch als Flashen bezeichnet. Das Flashen von Steuergeräten bietet insbesondere den Vorteil, dass defekte Steuergeräte nicht in jedem Fall ausgetauscht werden müssen. Durch die Realisierung von Steuergeräten, welche durch Flashen neue Software oder Daten übernehmen können, wurde die Möglichkeit geschaffen defekte Steuergeräte durch einen Softwareupdate zu reparieren oder neue Funktionalitäten in einem Steuergerät zu implementieren, ohne das Steuergerät austauschen zu müssen. Durch die Einführung der Flashmöglichkeit für Steuergeräte ergeben sich jedoch Probleme hinsichtlich der Sicherheit der vom Steuergerät übernommenen Programmdaten und hinsichtlich der Sicherheit des Programmdatenübernahmeprozesses selbst. Aus dem erstgenanten Sicherheitsproblem folgt z.B. die Frage, wie man verhindern kann, dass ein Unbefugter eine manipulierte Software in ein Steuergerät einbringt und dem Fahrzeugnutzer damit Schaden zufügt. Bezüglich der Sicherheit des Programmdatenübernahmeprozesses ist die Frage, in welchem Zustand ein Steuergerät sich befinden darf, um einen Flashvorgang zu akzeptieren. Z.B. darf ein Steuergerät während des Fahrzeugbetriebes in Abhängigkeit von seiner Funktionalität nicht in jedem Fall einen Flashvorgang erlauben.

Bei einem Flashprozess können Fehler auftreten, die je nach Funktionalität eines Steuergerätes unterschiedliche Folgen haben. Fällt durch das Flashen eine bestimmte Funktionalität eines Steuergerätes aus, so kann dies im schlimmsten Fall die Sicherheit der Insassen beeinflussen. Deshalb muss beim Flashen von Software in Fahrzeug-Steuergeräte, über eine Kommunikationsstrecke oder über einen Datenträger, sicher gestellt sein, dass sich aus dem Flashen heraus keine Gefährdung ergibt.

Die DE 10008974 A1 offenbart ein Verfahren zur Sicherstellung der Datenintegrität einer Software für ein Steuergerät eines Kraftfahrzeuges. Dabei werden Programmdaten, welche mit einer Signatur versehen sind im Steuergerät auf Authentizität überprüft, bevor die Daten akzeptiert werden. Das Verfahren stellt lediglich sicher, dass keine Daten durch Unbefugte in das Steuergerät einprogrammiert werden. Es befasst sich mit der Frage der Sicherheit der Software selbst.

Die DE 19921845 A1 offenbart ein Verfahren zum Einprogrammieren von Programmdaten in ein Steuergerät in einem Kraftfahrzeug. Dabei wird von einer Diagnosetestvorrichtung am Steuergerät abgefragt, welche Programmversion im Steuergerät vorhanden ist und die Programmversion gegebenen falls durch eine neue Version ersetzt. Das Verfahren stellt sicher, dass nur passende Programmdaten in das Steuergerät einprogrammiert werden.

Nachteilig bei den Verfahren zum Übernehmen von Daten in ein Steuergerät, gemäß Stand der Technik, sind die folgende Einschränkungen:
- Während dem Flashen wird kein sicherer Fahrzeugzustand automatisch gewährleistet. Die Verfahren eignen sich daher nicht zum Flashen von Programmdaten außerhalb einer Werkstatt, insbesondere während des Fahrzeugbetriebes.
- Die Verfahren garantieren nicht, dass die Funktionsfähigkeit des geflashten Steuergerätes erhalten bleibt.
- Es wird keine Aussage getroffen in welchem Betriebszustand sich ein Steuergerät bzw. das Fahrzeug für die Durchführung des Flashvorganges befinden muss. Es wird nicht berücksichtigt, dass ein Steuergerät einen Flashprozess ablehnen muss, wenn es sich in einem Zustand befindet, in dem die Ausführung des Flashprozesses die Sicherheit des Fahrers bzw. des Fahrzeuges gefährden könnte.
- Es erfolgt keine automatische Differenzierung der Steuergeräte hinsichtlich deren Sicherheitsrelevanz. Hierdurch entstehen für das Flashen aller Steuergeräte die gleichen Aufwände. Da auch sicherheitsunkritische Steuergeräte mit dem gleich hohen Aufwand, wie sicherheitskritische Steuergeräte behandelt werden entstehen vermeidbare Kosten.

Der Erfindung liegt die Aufgabe zugrunde ein Verfahren und eine Vorrichtung zur Übernahme von Programmdaten durch ein Steuergerät in einem Kraftfahrzeug bereitzustellen, welche die Nachteile des Standes der Technik vermeiden und insbesondere den sicheren Betrieb des Kraftfahrzeuges automatisch gewährleisten.

Erfindungsgemäß wird die Aufgabe durch das Verfahren und die Vorrichtung gemäß den unabhängigen Ansprüchen gelöst. Besondere Ausführungsformen sind Gegenstand der abhängigen Ansprüche.

Der Erfindung liegt der Gedanke zugrunde, dass von den Steuergeräte selbst das Bestehen der zur Sicherstellung ihrer Funktionalität notwendigen Situationen bei der Übernahme von Programmdaten überprüft werden kann. Diese Bedingungen werden nachfolgend als Programmdatenübernahmesituationen bezeichnet. Bei diesen Programmdatenübernahmesituationen handelt es sich um Bedingungen, welche durch eine Einteilung der unterschiedlichen Steuergeräte in Sicherheitsklassen (Safety-Klassen) vorgegeben werden.
Die Einteilung der Steuergeräte in Safety-Klassen richtet sich nach dem Betriebszustand des Steuergerätes bzw. des Fahrzeuges, in welchem ein Flashvorgang vorgenommen werden darf. Wird ein Steuergerät in eine dieser Safety-Klassen eingeteilt, ist dadurch präzise beschrieben in welchen Betriebszuständen ein Steuergerät einen Flashprozess erlauben darf und in welchen Betriebszuständen das Steuergerät einen Flashprozess ablehnen muss. Hieraus folgen die vor einem Flashprozess vom Steuergerät durchzuführenden Prüfungen. Wurde dem Steuergerät der Flashwunsch mitgeteilt. also eine Programmdatenübernahmeanfrage an das Steuergerät abgegeben, so muss dieses Steuergerät in Abhängigkeit von seiner Safety-Klasse überprüfen, ob es sich in einem Zustand befindet in dem es einen Flashprozess zulassen darf oder nicht. Aufgrund dieser Entscheidung wechselt das Steuergerät dann in eine Programmdatenübernahmezustand, den Zustand "Flashen", um den Flashprozess durchführen zu können, oder es beantwortet den Flashwunsch mit einer Fehlermeldung. Wechselt das Steuergerät in seinen Programmdatenübernahmezustand, so werden die Programmdaten von einer Datenübergabestelle, welche die Programmdaten bereit stellt, an das Steuergerät übertragen und das Steuergerät übernimmt die Programmdaten.

Vor der Durchführung eines Software-Downloads wird das Bestehen der durch die Safety-Klasseneinteilung des Steuergerätes vorgegebenen Programmdatenübernahmesituationen vom Steuergerät geprüft. Bevorzugt werden auch vom Sender der Programmdaten, also einer Datenübergabestelle, das Bestehen von für das betroffene Steuergerät vorgegebenen Programmdatenübernahmesituationen geprüft. Die vom Steuergerät und der Datenübergabestelle zu prüfenden Programmdatenübernahmesituationen stimmen dabei bevorzugt überein. Die Feststellung, welche Programmdatenübernahmesituationen bestehen müssen kann dabei bevorzugt durch Abfrage der Safety-Klasseneinordnung des Steuergerätes vorgenommen werden. Z.B. kann die Safety-Klasseneinordnung des Steuergerätes im Steuergerät abgespeichert sein.
In einer bevorzugten Ausführungsform des erfindungsgemäßen Verfahrens wird vom Steuergerät das Prüfungsergebnis der Programmübergabestelle abgefragt. Diese Abfrage kann auch zumindest Teile der Prüfung, ob die für das Steuergerät bestehenden Programmdatenübernahmesituationen bestehen ersetzen. Dadurch ergibt sich in vorteilhafter Weise ein Einsparungspotential bei der technischen Ausstattung des Steuergeräts.
Stimmen eine oder mehrere Anforderungen an die der Saftey-Klasseneinordnung entsprechenden Programmdatenübernahmesituationen nicht mit der momentanen Situation überein, so kann der Software-Download vom Steuergerät abgelehnt werden und/oder die Software wird nicht von der Datenübergabestelle bereit gestellt. Wenn die vorgegebenen Programmdatenübernahmesituationen nicht bestehen, können die zu übernehmenden Programmdaten von der Datenübergabestelle so lange zwischengespeichert werden, bis die passende Situation aktiv durch das Steuergerät herbei geführt ist und/oder eingetreten ist. Anschließend kann der Software-Download durchgeführt werden. Während des Software-Downloads wird vom Steuergerät und/oder von der Datenübergabestelle sicher gestellt, dass die vorgegebenen Programmdatenübernahmesituationen bestehen bleiben. Z.B. kann der Start des Motors verhindert werden. Besteht während des Software-Downloads eine Kommunikationsverbindung zwischen dem Steuergerät und einem Tester und/oder einer Datenübernahmekontrollzentrale (Zentrale), so wird der Programmdatenübernahmezustand vom Steuergerät bevorzugt erst verlassen, wenn ein, von der Zentrale abgegebener, Datenübernahmebeendigungsbefehl vom Steuergerät empfangen wurde.

Für die Festlegung der Safety-Klassen werden bevorzugt die folgenden Einflussfaktoren auf die Programmdatenübernahmesituationen berücksichtigt:
- Datenübertragungsweg (Flashwege), z.B. Flashen über eine Funkverbindung (Luftschnittstelle),
- Fahrzeugzustände, z.B. ob das Fahrzeug momentan in Betrieb ist,
- Art der Flashdaten,
- Initialisierung eines zu übernehmenden Steuergeräteprogramms (Flashware) und
- Steuergeräteprogrammsicherungsmöglichkeiten (Backupmöglichkeiten) der mit den zu übernehmenden Programmdaten zu überschreibenden und/oder zu ergänzenden alten Programmdaten.

Insbesondere sind dies Programmdatenübernahmesituationen, welche neben der Anforderung auf Authentizität und Integrität der zu übernehmenden Programmdaten bestehen, also programmdatenunabhängige Situationen. Unter Authentizität wird die Sicherheit verstanden, dass die Programmdaten von einer autorisierten Quelle stammen. Die Integrität der Daten bedeutet, dass die Daten unverfälscht und/oder fehlerfrei vom Steuergerät übernommen werden. Zur Sicherung der Integrität und Authentizität sind zusätzlich zum erfindungsgemäßen Verfahren die bekannten Verfahren aus dem Stand der Technik anwendbar. Bevorzugt wird ein Authentizitätsprüfen der Programmdaten vom Steuergerät oder von der Datenübergabestelle durchgeführt. Hierzu eignet sich z.B. das in der DE 10008974 A1 offenbarte Verfahren. Das Authentizitätsprüfen der Programmdaten wird dabei durch Überprüfen einer Signatur mittels eines öffentlichen Schlüssels durchgeführt, wobei ein Schlüsselpaar zum Ver- und Entschlüsseln der Programmdaten, bestehend aus einem geheimen und dem öffentlichen Schlüssel verwendet wird und die Programmdaten mit dem geheimen Schlüssel signiert wurden. Der öffentliche Schlüssel wird dabei bevorzugt im Steuergerät, z.B. innerhalb des Boot-Sektors hinterlegt.

Durch das erfindungsgemäße Verfahren und die Vorrichtungen zur Durchführung des Verfahrens werden die Nachteile des Standes der Technik vermieden. Insbesondere werden folgende Vorteile realisiert:
- Der Software Download in ein Steuergerät ist ohne Gefährdung von Personen und Gütern, z.B. über eine Kommunikationsstrecke oder einen Datenträger möglich.
- Die Erfindung ermöglicht das sichere Flashen von Software auch außerhalb einer Werkstatt, d.h. während des Fahrzeugeinsatzes.
- Aufwendige Flashverfahren werden nur für sicherheitskritische Steuergeräte verwendet. Daraus ergeben sich Kosteneinsparungspotentiale.

Die vorliegende Erfindung und bevorzugte Ausführungsformen der Erfindung werden nachfolgend anhand von einer Figur und Tabellen beschrieben.
Fig. 1 zeigt den prinzipiellen Aufbau eines erfindungsgemäßen Datenübergabesystems und wie die Komponenten des Systems, zur Durchführung des erfindungsgemäßen Verfahrens zusammen arbeiten.
Fig. 2 zeigt eine Tabelle in der die Programmübernahmesituationen angegeben sind, welche zur Programmdatenübernahme eines Steuergerätes, in Abhängigkeit von dessen Sicherheitsklasse, bestehen müssen.
Fig. 3 zeigt eine Tabelle in der Anforderungen an die Steuergeräte in Abhängigkeit von deren Sicherheitsklasse angegeben sind.

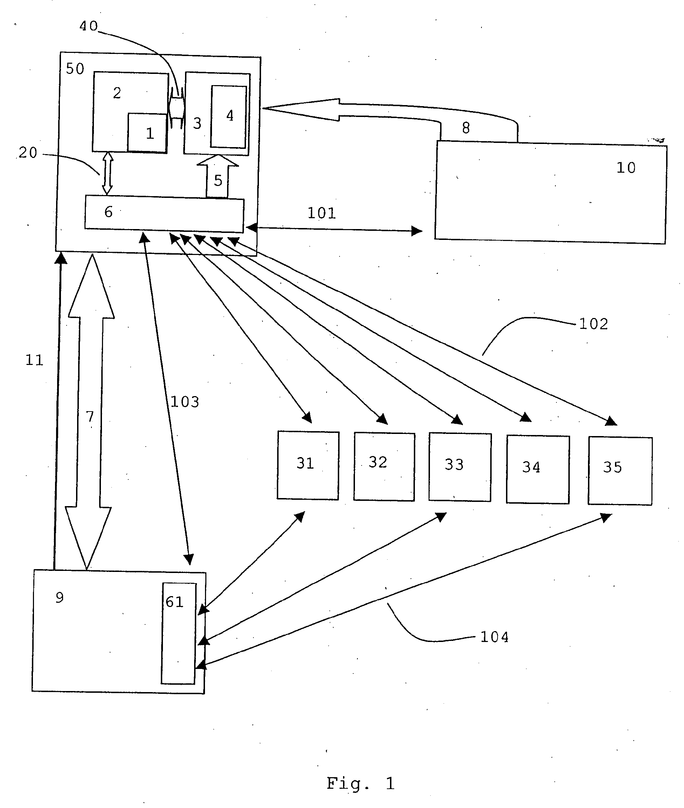

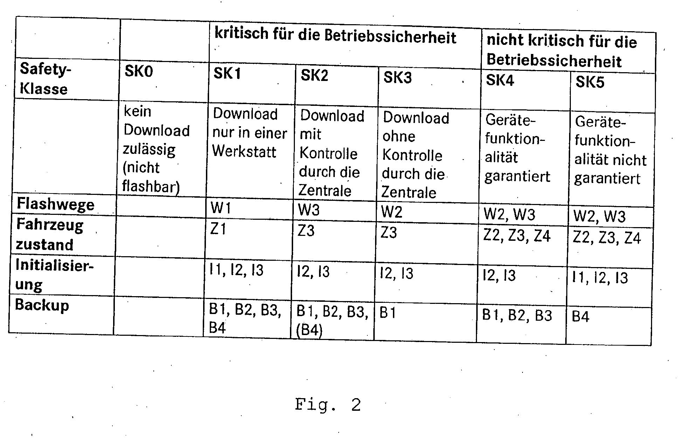

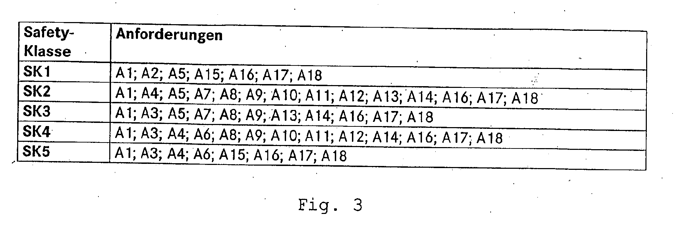

In Fig. 1 wird der Aufbau eines erfindungsgemäßen Datenübergabesystems und die Zusammenarbeit der Komponenten des Systems, zur Durchführung des erfindungsgemäßen Verfahrens dargestellt. Das dargestellte Steuergerät 50 könnte z.B. in die Safety-Klasse zwei oder drei der in Figur 2 dargestellten Tabelle eingeteilt sein, da der Programmdatenübernahmeprozess von einer Programmdatenübernahmekontrollzentrale 10 überwacht und kontrolliert 8 wird. Die Übernahme der Programmdaten durch das Steuergerät wird bevorzugt durch die Abgabe einer Programmdatenübernahmeanfrage 11 von der Programmdatenübergabestelle 9 an das Steuergerät initiiert. Die Programmdatenübergabestelle kann sich außerhalb des Fahrzeuges befinden. Dann kann die Kommunikation z.B. über eine Funkverbindung oder mittels optischer Übertragung durchgeführt werden. Die Programmdatenübergabestelle kann auch als Fahrzeugbauteil ausgeprägt sein. Die Kommunikation wird dann z.B. über einen Fahrzeugdatenbus geführt. Die zu übernehmenden Programmdaten können von einer externen Quelle, z.B. von einer Compactdisc, von der Programmdatenübergabestelle gelesen werden. Nach Erhalt der Programmdatenübernahmeanfrage beginnt das Steuergerät mit der Prüfung, ob die für seine Safety-Klasse vorgegebenen Programmdatenübernahmesituationen 31-35 bestehen. Hierzu kann die Safety-Klasse 1 des Steuergerätes, z.B. im Programmdatenspeicher 2 des Steuergerätes abgelegt sein und zur Feststellung, welche Programmdatenübernahmesituationen bestehen müssen, ausgelesen 20 werden. Die Zuordnung der Safety-Klassen zu den Programmdatenübernahmesituationen kann z.B. durch Verknüpfung über eine Tabelle, wie die in Fig. 2 beschriebene Tabelle, vorgenommen werden. Das hat den Vorteil, dass eine Software, welche zur Steuerung der Prüfungen eingesetzt wird für Steuergeräte verschiedenen Typs verwendet werden kann. Zur Prüfung 102 der Programmdatenübernahmesituationen ist das Steuergerät mit Mitteln zur Überprüfung 6 der vorgegebenen Programmdatenübernahmesituationen ausgestattet. Bevorzugte Ausprägungen dieser Mittel sind in der Tabelle in Figur 3 aufgeführt. In der dargestellten Ausführungsform wird weiterhin überprüft, ob die Programmdatenübernahmesituation "Kommunikationsverbindung mit Tester oder Datenübernahmekontrollzentrale" 101 besteht. Eine derartige Kommunikationsverbindung ist Voraussetzung für den Übergang des Steuergerätes in den Programmübernahmezustand 5, z.B. im Falle eines sicherheitskritischen Steuergerätes. Auch die Programmdatenübergabestelle 9 ist mit Mitteln zur Prüfung vorgegebener Programmdatenübernahmesituationen ausgestattet 61. Im dargestellten Ausführungsbeispiel überprüft 104 die Programmdatenübergabestelle das Bestehen der Programmdatenübernahmesituationen 31,33 und 35. Erst nach der Feststellung des Bestehens dieser Programmdatenübernahmesituationen stellt die Programmdatenübergabestelle die Programmdaten zur Übertragung bereit. Die Ausprägungen der Vorgabe, welche Programmdatenübernahmesituationen bestehen müssen, kann die Programmdatenübergabestelle z.B. durch Abfrage der im Steuergerät gespeicherten Safety-Klasse des Steuergeräts feststellen. Weiterhin ist eine Abfrage der Programmdatenübernahmesituationsprüfungsergebnisse 103 der Programmdatenübergabestelle vorgesehen.
Nachdem das Steuergerät festgestellt hat, dass alle vorgegebenen Programmdatenübernahmesituationen bestehen, erfolgt der Übergang des Steuergeräts in den Programmübernahmezustand. Die im Steuergerät vorgesehenen Mittel zur Übernahme der Programmdaten 3 können jetzt die Programmdaten von der Programmdatenübergabestelle übernehmen 7. Nach der Programmdatenübernahme wird bevorzugt eine Authentizitätsprüfung 4 der übernommenen Programmdaten durchgeführt, bevor dies an den Programmdatenspeicher 2 weiter gegeben 40 werden.

In Fig. 2 ist eine Tabelle dargestellt, in der die Programmübernahmesituationen angegeben sind, welche zur Programmdatenübernahme eines Steuergerätes, in Abhängigkeit von dessen Sicherheitsklasse, bestehen müssen. Die Steuergeräte werden, abhängig von den Folgen, die eine Steuergerätefehlfunktion auf die Fahrsicherheit des Fahrzeugs haben kann, in Safety-Klassen eingeteilt. Zunächst werden Steuergeräte unterschieden, deren Funktionalität kritisch für die Betriebssicherheit des Fahrzeuges ist, und solche Steuergeräte, deren Funktionalität unkritisch für die Betriebssicherheit ist. Aus Sicherheitstechnischer Sicht ist es nicht entscheidend, ob die Folgen einer Steuergerätefehlfunktion nicht oder nur schwer kontrollierbar sind. Daher lassen sich Steuergeräte in Bezug auf den Flashprozess in zwei Typen einteilen:
- Steuergeräte, bei denen unter keinen Umständen ein durch Flashen verursachter Fehler toleriert werden darf, weil die Sicherheit der Insassen oder Unbeteiligter davon betroffen sein kann und
- Steuergeräte, bei denen ein durch Flashen verursachter Fehler keine "ernsten" Folgen für die Fahrsicherheit hat und deshalb temporär toleriert werden kann.
Hinzu kommen noch die Steuergeräte, die gar nicht geflasht werden dürfen. Diese Unterteilung in drei Oberklassen wird für die beiden Fälle "kritisch für die Betriebssicherheit" und "nicht kritisch für die Betriebssicherheit" noch weiter verfeinert. Für die Oberklasse der für die Betriebssicherheit kritischen Steuergeräte werden drei verschiedene Safety-Klassen definiert, die sich hauptsächlich durch den Flashweg und somit die Möglichkeit der Überwachung des Flashvorganges unterscheiden. Die für die Betriebssicherheit nicht kritischen Steuergeräte können in zwei Safety-Klassen eingeteilt werden. Hier ist für den Anwender von Interesse, ob das Steuergerät nach dem Flashprozess noch funktionstüchtig ist oder nicht. Insgesamt ergeben sich daraus fünf Safety-Klassen SK1 bis SK5, zuzüglich der Safety-Klasse null SK0, welche Steuergeräte umfasst, die keinen Software-Download zulassen.

Nachfolgend werden zunächst die Programmdatenübernahmesituationen, welche für Steuergeräte in den unterschiedlichen Safety-klassen bestehen können im einzelnen aufgeführt. Anschließend werden die Safety-Klassen hinsichtlich der Vorgaben, welche Programmdatenübernahmesituationen für ein in die jeweilige Safety-Klasse eingeordnetes Steuergerät erfüllen muss, erläutert.

Die neuen Flashdaten können über verschiedene Schnittstellen in das Fahrzeug und somit in das zu flashende Steuergerät gelangen. Diese Datenübertragungswege werden nachfolgend als Flashwege bezeichnet. Die im folgenden aufgelisteten Flashwege beschrieben dabei den Ort an dem sich das Fahrzeug für den Flashprozess befinden muss, die Person, die den Flashprozess steuert, und die Übertragungseigenschaften des Kanals auf dem die Flashdaten in das Fahrzeug gelangen. Der Ort und die Person sind dabei miteinander verknüpft. Wird der Flashprozess in einer Werkstatt durchgeführt, so handelt es sich bei der Person, die den Flashprozess steuert um einen für den Flashprozess speziell geschulten Mitarbeiter. Dieser weiß aufgrund seiner Qualifikation, wie im Fehlerfall mit der aufgetretenen Situation umzugehen ist. Es ist daher davon auszugehen, dass dem Fahrzeugnutzer nach dem in der Werkstatt durchgeführten Flashprozesses ein vollständig funktionsfähiges Fahrzeug übergeben wird. Findet der Flashprozess außerhalb einer Werkstatt statt, kann man nicht davon ausgehen, dass die Person, die den Flashprozess steuert, weiß, wie mit einem Fehlerfall richtig umzugehen ist. In diesem Fall kann man deshalb nicht davon ausgehen, dass das Fahrzeug nach einem fehlerhaften Flashprozess weiterhin vollständig funktionsfähig ist. Die Qualität der aus den Flashwegen resultierenden unterschiedlichen Übertragungswege für die Flashdaten spielt für die Klassifizierung der verschiedenen Wege keine Rolle. Entscheidend für die Sicherheit des Flashprozesses auf den unterschiedlichen Wegen ist nicht die Häufigkeit, mit der ein Fehler auftritt, sondern die Möglichkeiten des Flashenden einen Fehler zu erkennen, darauf zu reagieren und das Steuergerät bzw. das Fahrzeug wieder in einen sicheren und funktionsfähigen Zustand zu versetzen. So besteht bei der Durchführung des Flashvorganges in einer Werkstatt als letzte Maßnahme die Möglichkeit ein defektes Steuergerät gegen ein neues funktionsfähiges Auszutauschen. Diese Möglichkeit besitzt der Fahrzeugnutzer, der den Flashvorgang außerhalb einer Werkstatt durchführt, nicht. Hier besteht die Gefahr, dass dieser trotz einer Fehlermeldung und einer eindringlichen Warnung versucht, das Fahrzeug mit dem fehlerhaften Steuergerät zu betreiben. Im Folgenden werden die drei Flashwege W1 bis W3 klassifiziert.
- Flashweg eins (W1): Flashen über einen Tester
   Wird der Flashprozess mit Hilfe eines Testers durchgeführt, muss sich das Fahrzeug zwingend in einer Werkstatt befinden, da nur dort der Zugriff auf einen Tester möglich ist. Der Flashprozess wird auf diesem Weg von geschultem Fachpersonal durchgeführt oder es besteht eine kurzfristige Zugriffsmöglichkeit auf geschultes Fachpersonal, sodass eventuell auftretende Fehler im Verlaufe des Flashvorgangs erkannt und behoben werden können. Als letzte Maßnahme kann im Fehlerfall das defekte Steuergerät in der Werkstatt auch ausgetauscht werden, um somit die sichere Funktionsfähigkeit des Steuergerätes und damit des Fahrzeuges garantieren zu können. Ein Gefährdung des Fahrzeugnutzers nach dem Werkstattaufenthalt ist daher mit hoher Wahrscheinlichkeit auszuschließen.
- Flashweg zwei (W2): Autarkes Flashen mit einer CD im Fahrzeug
   Für den Weg drei muss sich das Fahrzeug nicht in einer Werkstatt befinden. Stattdessen besitzt der Fahrzeugnutzer eine CD auf der die Flashdaten sowie die Informationen zum Flashvorgang gespeichert sind. Diese CD wird durch den Fahrzeugbenutzer in ein Laufwerk im Fahrzeug eingelegt. Der Flashprozess wird auf Weg zwei nicht von geschultem Fachpersonal ausgeführt, sondern von dem Fahrzeugbesitzer selbst ausgelöst. Es kann daher nicht davon ausgegangen werden, dass während dem Flashvorgang auftretende Fehler erkannt oder gar korrigiert werden können. Der Fahrzeugnutzer besitzt nicht die Möglichkeit das Steuergerät in jedem Fall wieder in einen funktionsfähigen Zustand zu versetzten. Auch steht dem Fahrzeugnutzer nicht die Möglichkeit offen, den Fehlerfall durch den Austausch des Steuergerätes zu beheben. Eine Gefährdung des Fahrzeugnutzers durch ein, durch den Flashprozess unbrauchbar gewordenes, Steuergerät ist daher für diesen Flashweg nicht auszuschließen.
- Flashweg drei (W3): Flashen über die Luftschnittstelle
   Dieser Weg kann auch verwendet werden, wenn sich das Fahrzeug nicht in einer Werkstatt befindet. Die Flashdaten werden auf Initiative einer Zentrale oder des Fahrzeugnutzers über die Luftschnittstelle in das Fahrzeug geladen. Auch die Daten über den Flashjob gelangen auf diese Weise in das Fahrzeug. Der Flashvorgang wird auf der Fahrzeugseite nicht von geschultem Fachpersonal durchgeführt, sondern vom Fahrzeugnutzer selbst.
   Fehler Im Fahrzeug können daher unerkannt bleiben und somit nicht behoben werden. Ebenso wie bei Flashweg drei besitzt der Fahrzeugnutzer im Fehlerfalle nicht generell die Möglichkeit den Fehler zu beheben und das Steuergerät damit in einen funktionsfähigen Zustand zu bringen. Auf Seiten der Zentrale kann der Flashvorgang von einem zentralen Server-System automatisch oder von einem Mitarbeiter der Zentrale unterstützt und überwacht werden. In beiden Fällen können Fehler während des Flashvorganges durch geeignete Diagnose-Tools in der Zentrale erkannt werden. Die Möglichkeiten den Fehler zu beheben sind allerdings durch das Übertragungsmedium sehr eingeschränkt. So kann der, in der Werkstatt als letzte Maßnahme dargestellte, Austausch des fehlerhaften Steuergerätes nicht direkt durchgeführt werden. Die Zentrale kann lediglich von sich aus einen Service-Techniker zum Fahrzeug rufen, der dann das Problem behebt. Eine Gefährdung des Fahrzeugnutzers kann allerdings nicht vollständig ausgeschlossen werden, da dieser, trotz des fehlerhaften Steuergerätes und einer eventuellen Warnung seitens der Zentrale, versuchen kann das Fahrzeug in Betrieb zu nehmen.
   Ein Fahrzeug kann sich während des Flashprozesses in verschiedenen Zuständen befinden, die unterschiedliche Auswirkungen auf die Möglichkeit des Flashens haben. Den Steuergeräten muss es daher möglich sein, den Fahrzeugzustand zu erkennen und/oder von einem anderen Steuergerät auszulesen. Das Steuergerät wechselt abhängig von diesen Information in einen Datenübernahmezustand oder verweigert die Datenübernahme. Im Folgenden werden die vier Fahrzeugzustände Z1 bis Z4 klassifiziert.
- Fahrzeugzustand eins (Z1): An das Fahrzeug ist ein Tester angeschlossen
   In diesem Fahrzeugzustand ist ein Tester an das Fahrzeug angeschlossen, der den Software-Download mit entsprechenden Diagnose-Tools überwachen kann. Ob in diesem Zustand der Motor des Fahrzeuges angeschaltet ist oder nicht, ist nicht relevant, da es sich bei dem Testdurchführenden um geschultes Fachpersonal handelt, das über Gefahren und Risiken ausreichend informiert ist. Weiterhin kann es an dieser Stelle zu Diagnoseoder Initialisierungszwecken auch notwendig sein, dass der Motor läuft. Da dem das Flashen Durchführenden alle vorhandenen Diagnosetools auf dem Tester zur Verfügung stehen, kann man davon ausgehen, dass Fehler, die beim Flashen auftreten, durch das Fachpersonal in der Werkstatt erkannt werden und entsprechende Gegenmaßnahmen ergriffen werden können. Kommt das Fahrzeug aus der Werkstatt, kann der Fahrzeugführer davon ausgehen, dass alle Flashprozesse ordnungsgemäß und fehlerfrei durchgeführt wurden. Dieser Fahrzeugzustand ist mit dem Flashwege W1 verknüpft.
- Fahrzeugzustand zwei (Z2): Der Motor des Fahrzeuges läuft Ist der Motor des Fahrzeuges an, so wird sich das Fahrzeug im Normalfall auch in Bewegung befinden. Dementsprechend muss sich zumindest ein Fahrer im Fahrzeug befinden. Dieser kann, eingeschränkt durch die notwendige Konzentration auf den Verkehr, den Flashprozess überwachen. Der Fahrzeugführer ist allerdings im Gegensatz zu dem Fachpersonal einer Werkstatt nicht für das Flashen ausgebildet. Weiterhin stehen in Fahrzeugzustand zwei nicht die durch den Tester gelieferten Diagnosedaten zur Verfügung. Eventuelle Fehler beim Flashen können daher unerkannt bleiben oder durch den Fahrzeugnutzer nicht behoben werden. Es kann demnach nicht sicher von einem erfolgreichen Flashen ausgegangen werden. Wird das gerade im Flashprozess befindliche Steuergerät für den Fahrbetrieb des Fahrzeugs benötigt, so kann der Ausfall des Steuergeräts unvorhersehbare Folgen haben. Deshalb ist Fahrzeugzustand zwei als besonders kritisch einzuschätzen. In diesem Zustand ist auch zu berücksichtigen, dass das Fahrzeugnetz bereits durch die für das Fahren des Fahrzeugs erforderliche Kommunikation belastet ist und das Flashen eines Steuergerätes eine weitere Netzlast erzeugt. Die für den sicheren Betrieb des Fahrzeugs notwendige Datenkommunikation muss in diesem Zustand Vorrang vor der durch den Flashprozess verursachten Datenkommunikation haben. Dementsprechend müssen die Steuergeräte bzw. das Fahrzeugnetzwerk die Möglichkeiten haben, die Datenkommunikation mit unterschiedlichen Prioritäten zu belegen.
- Fahrzeugzustand drei(Z3): Der Motor des Fahrzeuges ist aus und die Zündung ist an
   Ist der Motor des Fahrzeuges aus, die Zündung des Fahrzeuges allerdings angeschaltet, so hat zwar eine Person die Zündung des Fahrzeuges eingeschaltet, dass diese Person den gesamten Verlauf des Flashvorganges im Fahrzeug beobachtet, kann jedoch nicht angenommen werden. Die Überwachung des Flashprozesses ist damit nicht über den gesamten Zeitraum hinweg sicher gewährleistet. Im Gegensatz zu den Angestellten einer Werkstatt ist der Fahrzeugführer nicht speziell für das Durchführen eines Flashprozesses ausgebildet. Er besitzt keinen Tester, über den er Diagnosedaten des Steuergerätes auslesen kann. Es kann daher zu unerkannten Fehlern während des Flashprozesses kommen. Werden Fehler durch den Flashenden erkannt, so ist nicht sichergestellt, dass dieser richtig auf den Fehler reagieren kann. Im Fahrzeugzustand drei kann nicht von einem erfolgreichen Flashprozess ausgegangen werden.
- Fahrzeugzustand vier (Z4): Der Motor des Fahrzeuges ist aus und die Zündung ist aus
   In diesem Fahrzeugzustand, wenn sowohl Motor als auch Zündung aus sind, kann nicht davon ausgegangen werden, dass zur Überwachung des Downloads sich der Fahrzeugnutzer im Fahrzeug aufhält. Vielmehr ist besonders bei einem Download über die Luftschnittstelle (W3) davon auszugehen, dass das Flashen des Steuergerätes ohne Einwirkung des Fahrzeugbesitzers durchgeführt wird. Fehler, die während des Flashprozesses entstehen, werden hierdurch sehr wahrscheinlich unentdeckt bleiben. Weiterhin ist nicht sichergestellt, dass Fehler, die vom Fahrzeugbesitzer entdeckt werden, von diesem behoben werden können. Von einem erfolgreichen Flashprozess kann in diesem Zustand ebenfalls nicht ausgegangen werden. Da zum Flashen einer neuen Flashware bei einer Kombination dieses Zustandes mit dem Flashweg Luftschnittstelle (W3) der Flashprozess gestartet werden kann, ohne physikalischen Zugang zum Fahrzeug zu besitzen, muss der Flashprozess in dieser Kombination durch zusätzliche Maßnahmen abgesichert werden.
   Nach dem Übertragen einer Flashware kann es die Notwendigkeit geben, dass die Flashware, bevor sie einsatzfähig ist, initialisiert bzw. konfiguriert werden muss. Wird diese Initialisierung bei den entsprechenden Steuergeräten nicht korrekt ausgeführt, kann die korrekte Funktionsweise des geflashten Steuergerätes nicht gewährleistet werden. Das zu flashende Steuergerät muss vor dem Flashvorgang feststellen können, welchen Initialisierungsvorgang die neue Flashware benötigt. Dies ist notwendig, damit das Steuergerät in Abhängigkeit von seiner Safety-Klasse entscheiden kann, ob es einen Flashprozess zulässt oder nicht. Erst wenn diese Entscheidung getroffen werden konnte, darf das Steuergerät in den Zustand "Flashen" übergehen. Die möglichen Steuergeräteinitialisierungsmöglichkeiten können in die folgenden drei Initialisierungsmöglichkeiten I1 bis I3 eingeteilt werden:
- Initialisierung eins (I1): manuelle Initialisierung
   Diese Initialisierungsmöglichkeit beschriebt den Fall, dass nach einem Flashvorgang das Steuergerät manuell Initialisiert werden muss. Dazu muss es am Fahrzeug jemanden geben, der den Flashprozess überwacht und die Initialisierung durchführen kann. Hierzu gibt das Steuergerät Anweisungen über die durchzuführenden manuellen Initialisierungsmaßnahmen und der Flashende muss diese gewissenhaft und korrekt ausführen. Werden diese Initialisierungsmaßnahmen nicht korrekt ausgeführt, so kann es in diesen Steuergeräten zu Fehlfunktionen kommen, deren Folgen nicht einschätzbar sind.
- Initialisierung zwei (I2): automatische Initialisierung
   Bei dieser Initialisierungsmöglichkeit kann sich ein geflashtes Steuergerät nach dem Flashvorgang selbstständig, automatisch initialisieren. Daher bedarf es keiner direkten Überwachung durch den Flashenden am Fahrzeug. Es müssen lediglich die durch die Initialisierung möglicherweise erzeugten Fehlermeldungen bearbeitet werden. Die notwendigen Initialisierungsschritte führt ein Steuergerät automatisch direkt nach dem erfolgreichen Flashprozess durch. Hierzu ist keine Interaktion mit dem Fahrzeugnutzer erforderlich.
- Initialisierung drei (I3): keine Initialisierung
   Durch diese Initialisierungsmöglichkeit wird der Fall beschrieben, dass nach einem Flashprozess kein Initialisierungsvorgang für das Steuergerät mehr notwendig ist. Ein Steuergerät kann demnach direkt nach dem Flashprozess, ohne dass weiter Schritt notwendig sind, verwendet werden.
   Die Backup-Möglichkeit für die Flashware eines Steuergerätes ist eine weitere Programmdatenübernahmesituation, welche für die Safety-Klasseneinteilung berücksichtigt wird. In Abhängigkeit von den gegebenen Möglichkeiten zum Erstellen eines Backups können Fehler während des Flashprozesses Fahrzeug intern behoben werden oder nicht. Ein Steuergerät muss dabei entscheiden können, welche Möglichkeit ein Backup anzulegen es besitzt.
   Die folgenden Steuergeräteprogrammsicherungsmöglichkeiten (Backup) B1 bis B4 werden für die Safety-Klasseneinteilung berücksichtigt:
- Backup eins (B1): Backup intern auf dem Steuergerät möglich Ist einem Steuergerät diese Möglichkeit gegeben, so besitzt es ausreichend freien Speicherplatz, um die bisher gespeicherte Version der Flashware zu Backup-Zwecken zwischenzuspeichern. Dabei muss das Gerät die vorhandene Flashware im freien Speicher ablegen können und dieses Backup im Fehlerfall wieder einspielen können. Bei einer internen Sicherung der bereits eingespielten Flashware kann davon ausgegangen werden, dass der alte Zustand des Steuergerätes nach einem fehlerhaften Flashprozess wieder hergestellt werden kann. Wenn ein Rückspielen der Flashware erforderlich ist und es dabei zu einem Fehler kommt, deutet dies auf einen Fehler in der Hardware des Steuergerätes hin und das Steuergerät muss ausgetauscht werden.
- Backup zwei (B2): Backup auf einem externen Steuergerät
   In diesem Fall besitzt das zu flashende Steuergeräte nicht ausreichend Speicherplatz, um ein Backup der aktuell eingespielten Flashware im eigenen Speicher abzulegen. Aus diesem Grund wird das Backup über das interne Fahrzeug-Netzwerk in ein anderes Steuergerät (Backup-Gerät) eingespielt. Das Backup-Gerät muss hierzu in der Lage sein, die Flashware des zu flashenden Steuergerätes über das interne Fahrzeugnetzwerk zwischenzuspeichern und die Flashware auf Anforderung hin wieder in das ursprüngliche Steuergerät zurückzuspielen. Das Backup-Gerät muss in der Lage sein, unabhängig davon ob das Backup gebraucht wurde oder nicht, die in seinem Speicher abgelegten Dateien wieder zu löschen. Bei dieser Backup-Möglichkeit hängt die Wiederherstellbarkeit des Originalzustandes an der Fehlerbehandlung des internen Fahrzeug-Netzwerkes. Wird durch entsprechende Mechanismen sichergestellt, dass die über das interne Fahrzeug-Netzwerk übertragene Flashware fehlerfrei in dem zweiten Steuergerät gespeichert werden kann und aus diesem auch wieder fehlerfrei in das ursprüngliche Steuergerät eingespielt werden kann, besteht auch auf dieser Backup-Stufe die Möglichkeit den alten Zustand des geflashten Steuergerätes nach einem Fehler wieder herzustellen. Ist die fehlerfreie Übertragung über das interne Fahrzeug-Netzwerk nicht gewährleistet, so kann in dieser Backup-Stufe nicht davon ausgegangen werden, dass der alte Zustand des geflashten Gerätes wieder herstellbar ist. Weiterhin ist die Wiederherstellbarkeit des ursprünglichen Zustandes des geflashten Steuergerätes abhängig von der Zuverlässigkeit des externen Steuergerätes, auf dem das Backup abgelegt wird. Kommt es zu einem unerkannten Fehler aufgrund einer Beschädigung des externen Steuergerätes, so ist das Wiederherstellen des Originalzustandes ebenfalls nicht mehr möglich. Um das Backup wieder in das Steuergerät zurückspielen zu können, muss das Backup mit Sicherheitsmechanismen abgesichert werden. Für derartige Sicherheitsmechanismen kann. z.B. ein asymmetrisches Verschlüsselungsverfahren verwendet werden. Würde man ein Einspielen des Backups ohne Sicherheitsmechanismen zulassen, würde man eine Hintertür für Angreifer öffnen, falls nicht andere Maßnahmen für die Absicherung des Backups getroffen werden.
- Backup drei (B3): Pufferung der Flashdaten auf einem externen Steuergerät
   Hierbei handelt es sich nicht um ein Backup im eigentlichen Sinne, sondern um eine Vorverarbeitung der Flashware in einem Steuergerät, dass über genügend Speicherplatz verfügt, um die Flashware zwischenzuspeichern. Das Steuergerät, welches die Flashware zwischenspeichert, muss in der Lage sein, die Flashware nach dem Flashen hinsichtlich Authentizität und Integrität zu testen. Erst wenn diese Tests positiv verlaufen sind, darf das zwischenspeichernde Steuergerät die Flashware an das Zielsteuergerät weitergeben. Dieses überschreibt direkt den Speicherplatz, der die alte Flashware beinhaltet, mit der neuen Flashware. Schlägt einer dieser Tests trotz der vorherigen Prüfung in dem zwischenspeichernden Steuergerät fehl, so kann der ursprüngliche Zustand des Steuergerätes nicht wiederhergestellt werden. Aus diesem Grund muss der Übertragungskanal zwischen beiden Steuergeräten bestmöglich abgesichert sein, um durch diesen Mechanismus eine fehlerfreie Einspielung der Flashware zu garantieren. Kann die Sicherheit des Übertragungskanals nicht garantiert werden, so wäre das Zwischenspeichern der Flashware auf einem zweiten Steuergerät hinfällig. Auch hier ist die Zuverlässigkeit des zwischenspeichernden Steuergerätes ausschlaggebend für die Funktionalität dieses Backup-Ansatzes. Ist dieses Steuergerät nicht in der Lage die Flashware fehlerfrei abzulegen und wird ein Fehler nicht bemerkt, so ist auch in diesem Fall die fehlerfreie Einspielung der Flashware nicht gewährleistet.
- Backup vier (B4): Backup nicht möglich
   Die letzte Backup-Klasse beschreibt den Fall, dass der Speicher des zu flashenden Gerätes zu klein ist, um ein Backup der aktuell eingespielten Flashware anlegen zu können. Weiterhin gibt es keine Möglichkeit auf einem anderen Gerät ein Backup anzulegen (B2) oder ein anderes Gerät als Zwischenspeicher zu verwenden (B3). Wenn nicht die Möglichkeit besteht ein Backup der aktuell eingespielten Flashware anzulegen, kann bei einem fehlerhaften Flashprozess der ursprüngliche Zustand des Steuergerätes nicht mehr hergestellt werden. Das Steuergerät ist in diesem Fall durch den Flashprozess nicht mehr einsatzfähig.
   Die nachfolgend beschriebenen Safety-Klassen SK0 bis SK5 sind aufwärtskompatibel, d.h. wird ein Steuergerät in eine niedrigere Safety-Klasse (größere Zahl -> kleinere Sicherheitserfordernis) eingeteilt, so können die möglichen Flashprozesse der höheren Safety-Klassen auch zugelassen werden. Ein Steuergerät in Safety-Klasse SK5 kann daher, mit Hilfe der durch die Safety-Klasse beschriebenen fünf verschiedenen Flashprozesse geflasht werden. Die Art der Flashdaten wird für die Einteilung der Steuergeräte in die Safety-Klassen in diesem Ausführungsbeispiel nicht berücksichtigt. Dies liegt daran, dass zum einen die Flashdaten keinen Einfluss in Bezug auf die Betriebssicherheit haben. Sowohl ein Teil des Betriebssystems, als auch eine Applikation oder Parameter können im Fehlerfall die Betriebssicherheit des Fahrzeuges beeinflussen. Zum anderen werden in diesem Ausführungsbeispiel Steuergeräte als ganzes betrachtet, ohne eine Unterscheidung nach ihren einzelnen Funktionalitäten. Würden einzelne Funktionalitäten des Steuergerätes betrachtet werden, so könnte es vorkommen, dass ein Steuergerät in verschiedene Safety-Klassen eingeteilt werden müsste. Dieses Gerät müsste dann in Abhängigkeit der durch den Flashvorgang veränderten Funktionalität entscheiden, ob es den Flashvorgang im aktuellen Zustand zulässt oder nicht.
   Die nachfolgend aufgeführten sechs Safety-Klassen SK0 bis SK5 werden bevorzugt für die einzelnen Steuergeräte vorgesehen:
- Safety-Klasse null (SK0)
   Dieser Klasse werden Steuergerät zugeordnet, die aufgrund ihrer technischen Gegebenheiten oder anderer Anforderungen nicht flashbar sind. Derartige Steuergeräte kommen für den Einsatz des erfindungsgemäßen Verfahrens nicht in Frage.
- Safety-Klasse eins (SK1)
   Dieser Klasse werden Steuergeräte zugeordnet, die bezüglich der Betriebssicherheit hochkritisch sind. Für diese Steuergeräte ist ein Flashen nur in einer Werkstatt zugelassen. Nach dem Flashen und vor dem eigentlichen Fahrzeugbetrieb werden umfangreiche Tests und Diagnosen von geschultem Personal durchgeführt, um die Fehlerwahrscheinlichkeit so klein wie möglich zu halten. Werden bei diesen Tests Fehler entdeckt, so kann das Fachpersonal entsprechend reagieren und den Fehler beheben. Die korrekte Durchführung einer manuellen Initialisierung in der Werkstatt ist gewährleistet, so dass diese Art der Initialisierung nur in dieser Safety-Klasse zugelassen ist. Steuergeräte, die dieser Safety-Klasse zugeordnet sind, dürfen nur dann in den Zustand "Flashen" übergehen, wenn in der Werkstatt ein Tester an das Fahrzeug angeschlossen ist. Ob der Motor in diesem Zustand läuft oder nicht, ist in diesem Fall nachgeordnet. Ein Backup ist möglich, wird aber nicht gefordert, weil durch organisatorische Maßnahmen gewährleistet wird, dass ein Fahrzeug nicht in Betrieb genommen wird, ohne das entsprechende Gerät ausführlich getestet zu haben. Außerdem besteht in der Werkstatt die Möglichkeit im Notfall eine alte, funktionsfähige Version der Flashware in das Steuergerät einzuspielen oder das Steuergerät im Falle eines größeren Defektes komplett durch ein neues zu ersetzten. Den Zustand "Flashen" dürfen die Steuergeräte nur dann verlassen, wenn ihnen dieses über den entsprechenden Befehl des Testers mitgeteilt wurde.
- Safety-Klasse zwei (SK2)
   Dieser Klasse werden Steuergeräte zugeordnet, die bezüglich der Betriebssicherheit kritisch sind. In dieser Safety-Klasse wird der Flashvorgang über die Luftschnittstelle durchgeführt und von einer Zentrale überwacht. Ein Flashprozess ist auch außerhalb einer Werkstatt zugelassen. Dabei darf sich das Fahrzeug allerdings nicht in Bewegung befinden. Dies wird durch die Forderung, dass der Motor nicht an sein darf, erreicht. Durch die Überwachung des Flashvorganges über die Luftschnittstelle kann auch in dieser Safety-Klasse von einer minimierten Fehlerwahrscheinlichkeit ausgegangen werden. Wird ein Fehler entdeckt, so sind die Eingriffsmöglichkeiten der Zentrale auf Grund der Entfernung zum geflashten Fahrzeug jedoch begrenzt. Aus diesem Grund wird in dieser Klasse entweder das Anlegen eines Backups gefordert, das bei Ausfall der Verbindung über die Luftschnittstelle automatisiert wieder eingespielt wird. Andererseits kann auf das Anlegen eines Backups verzichtet werden, wenn durch den Zustand "Flashen" des Steuergerätes ein Motorstart verhindert wird. Solange wie die Zentrale dann den Zustand "Flashen" des Steuergerätes nicht beendet, darf eine Inbetriebnahme des Fahrzeuges nicht mehr möglich sein. Wie aus dem letzten Abschnitt hervorgeht, dürfen Steuergerät in dieser Safety-Klasse nur mit einer Online-Verbindung über die Luftschnittstelle geflasht werden. Entscheidend in dieser Safety-Klasse ist die Möglichkeit der Überwachung des Flashvorganges durch die Zentrale über die Luftschnittstelle. Den Zustand "Flashen" verlassen die Steuergeräte, wenn ihnen über die Luftschnittstelle der Befehl hierzu erteilt wird. Wird die Verbindung über die Luftschnittstelle unterbrochen, so wird versucht das Backup wiedereinzuspielen, um daraufhin den Zustand "Flashen" verlassen zu können. Existiert kein Backup oder kann dieses nicht eingespielt werden, so verweilt das Steuergerät in dem Zustand solange bis es über die Luftschnittstelle oder einen zur Fehlerbehebung angeschlossenen Tester eine korrekte Flashware erhält. Als Initialisierungsvariante für das geflashte Steuergerät ist in dieser Safety-Klasse nur die automatische oder keine zugelassen, da ein Fehler bei der manuellen Initialisierung die Funktionalität des Steuergerätes gefährden kann. Dieses darf nicht zugelassen werden, da sich in dieser Safety-Klasse Steuergeräte befinden, die für die Betriebssicherheit des Fahrzeuges wichtig sind. Dass vor dem Flashvorgang kein Backup angelegt wird, kann nur zugelassen werden, wenn es dem Steuergerät möglich ist den Motorstart zu verhindern, bis das Steuergerät von der Zentrale wieder freigeschaltet wurde.
- Safety-Klasse drei (SK3)
   Dieser Klasse werden Steuergeräte zugeordnet, die bezüglich der Betriebssicherheit kritisch sind. In dieser Safety-Klasse werden die Steuergerät vom Fahrzeugnutzer ohne Überwachung durch eine Zentrale durchgeführt. Ein Flashprozess ist auch außerhalb einer Werkstatt zugelassen. Das Fahrzeug darf sich nicht in Bewegung befinden. Diese Forderung wird dadurch erfüllt, dass der Motor während eines Flashvorganges in dieser Safety-Klasse nicht angeschaltet sein darf. In dieser Safety-Klasse führt der Fahrzeugnutzer den Flashvorgang mit Hilfe einer in ein Laufwerk im Fahrzeug eingelegten CD selbstständig aus. Es besteht in dieser Klasse keine Zugriffsmöglichkeit auf geschultes Personal. Da die Test- und Diagnosemöglichkeiten nach einem solchen Flashvorgang begrenzt sind und nicht durch organisatorische Maßnahmen gewährleistet werden können, muss ein Backup vorgesehen werden, damit im Fehlerfall das Gerät wieder in den Zustand vor dem Flashen versetzt werden kann. Dabei ist hier nur ein internes Backup zugelassen. In dieser Safety-Klasse sind ebenso wie in SK2 nur die Initialisierungsklassen automatische Initialisierung (I2) oder keine Initialisierung (I3) zugelassen. Ein Fehler bei einer manuellen Initialisierung kann zu einer Gefährdung der korrekten Funktionalität des Steuergerätes, führen, die in dieser Safety-Klasse nicht akzeptiert werden kann. Der Zustand "Flashen" wird von den Steuergeräten in dieser Safety-Klasse entweder nach erfolgreicher Durchführung des Flashvorganges oder erfolgreicher Wiederherstellung des Ursprungszustandes durch das Wiedereinspielen des Backups verlassen. Die Zuordnung von Geräten zu der Safety-Klasse SK3 schließt ein Flashen in der Werkstatt jedoch nicht aus.
- Safety-Klasse vier (SK4)
   Dieser Klasse werden Steuergeräte zugeordnet, die bezüglich der Betriebssicherheit nicht sensibel sind. Diese Steuergeräte unterliegen allerdings der Forderung, dass durch einen Flashvorgang kein Steuergeräteausfall verursacht werden darf. Für diese Steuergeräte ist ein Download außerhalb einer Werkstatt sowohl in beiden Ruhezuständen (Z3, Z4) als auch im Fahrbetrieb (Z2) zugelassen. Um die Gerätefunktionalität nach einem Flashprozess zu garantieren, muss entweder ein internes Backup(B1), ein externes Backup (B2) oder eine Zwischenspeicherung der Flashdaten (B3) vorgesehen werden, damit im Fehlerfall das Steuergerät in den Zustand vor dem Flashen versetzt werden kann oder im Falle von B3 in diesem Zustand bleibt. Dabei wird vorausgesetzt, dass die Verbindung zwischen dem geflashten Steuergerät und dem externen Backupgerät fehlerfrei funktioniert. Ein Einschränkung auf lediglich das interne Backup (B1) wie in der SK3, ist an dieser Stelle nicht notwendig, da die Funktionalität des Steuergerätes bezüglich der Betriebssicherheit nicht sensibel ist. Die Forderung, dass die Funktionalität des Steuergerätes garantiert werden soll, hat für die Sicherheit der Insassen nicht den gleichen Stellenwert, wie bei einem Steuergerät, das für die Betriebssicherheit ausschlaggebend ist. An dieser Stelle könnten auch die Backupmöglichkeiten B2 und B3 zugelassen werden. Eine manuelle Initialisierung des geflashten Steuergerätes kann in dieser Safety-Klasse nicht zugelassen werden, da die korrekte Durchführung der Initialisierung nicht' gewährleistet werden kann. Fehler während des Initialisierungsvorganges können zu Funktionsfehlern im Steuergerät führen, was der Forderung dieser Safety-Klasse, die Funktionalität des Steuergerätes nach dem Flashvorgang zu garantieren, wiedersprechen würde. Der Zustand "Flashen" wird von den Steuergeräten in dieser Safety-Klasse entweder nach erfolgreicher Durchführung des Flashvorganges oder erfolgreicher Wiederherstellung des Ursprungszustandes durch das Wiedereinspielen des Backups verlassen. Für die Datenübertragung außerhalb einer Werkstatt können alle Flashwege verwendet werden, für die kein Tester benötigt wird. Auf die Überwachung des Flashvorganges auf der Luftschnittstelle kann in dieser Safety-Klasse verzichtet werden. Die Zuordnung von Geräten zu der Safety-Klasse SK4 schließt ein Flashen in der Werkstatt jedoch nicht aus.
- Safety-Klasse fünf (SK5)
   Dieser Klasse werden Steuergeräte zugeordnet, die bezüglich der Betriebssicherheit nicht sensibel sind und deren Funktionalität nach einem Flashvorgang nicht garantiert werden muss. Für diese Steuergeräte ist ein Flashen außerhalb einer Werkstatt sowohl in den beiden Ruhezuständen (Z3, Z4) als auch im Fahrbetrieb (Z2) zugelassen. Da in dieser Safety-Klasse nicht gefordert wird, dass man das Steuergerät nach einem Flashprozess im Fehlerfall wieder in einen funktionsfähigen Zustand versetzten muss, ist das Anlegen eines Backups nicht erforderlich. In dieser Safety-Klasse gibt es keine speziellen Anforderungen an den Initialisierungsvorgang, da hier keine Forderungen an die Funktionalität des Steuergerätes gestellt werden. Eine manuelle Initialisierung kann demnach ohne den Forderungen der Safety-Klasse zu wiedersprechen zugelassen werden. Den Zustand "Flashen" kann ein Steuergerät dieser Safety-Klasse jederzeit wieder verlassen. Für die Datenübertragung außerhalb einer Werkstatt können alle Flashwege verwendet werden, für die kein Tester benötigt wird. Auf die Überwachung des Flashvorganges auf der Luftschnittstelle kann in dieser Safety-Klasse verzichtet werden. Die Zuordnung von Geräten zu der Safety-Klasse SK5 schließt ein Download in der Werkstatt jedoch nicht aus.
   Fig. 3 zeigt eine Tabelle in der Anforderungen an die technische Ausführung der Steuergeräte in Abhängigkeit von deren Sicherheitsklasse angegeben sind. Im Rahmen dieser technischen Ausführungen der Steuergeräte werden auch die Ausprägungen der in einem erfindungsgemäßen Steuergerät vorgesehenen Mittel zur Prüfung der vorgegebenen Programmdatenübernahmesituationen spezifiziert.
   Die einzelnen Safety-Klassen unterscheiden sich in den Anforderungen, die sie an das jeweilige Steuergerät in der entsprechenden Klasse stellen. In der dargestellten Tabelle sind die Anforderungen aus den nachfolgend angeführten Anforderungen A1 bis A20, aufgelistet, die ein Steuergerät erfüllen muss, wenn es in eine bestimmte Safety-Klasse eingeteilt werden soll. Dabei sind nur die Anforderungen aufgelistet, die zwingend erforderlich sind. So ist es zum Beispiel in der Safety-Klasse SK5 nicht unbedingt notwendig, dass ein Steuergerät ein Backup anlegen kann. Die Anforderung A10 ist in der Tabelle daher nicht mit aufgeführt. Erfüllt ein Steuergerät jedoch diese Anforderung so ist dies kein Hinderungsgrund das Steuergerät in die Safety-Klasse SK5 einzuteilen. Wird ein Steuergerät in eine dieser Safety-Klassen eingeteilt, so müssen mindestens die in der Tabelle gestellten Anforderungen durch das Steuergerät erfüllt werden. Kann ein Steuergerät diese Anforderungen nicht erfüllen, so muss es in eine andere Safety-Klasse mit geringeren Anforderungen eingeteilt werden.
   Die für in die beschriebenen Safety-Klassen eingeordneten Steuergeräte, in Abhängigkeit von deren Safety-Klasse, gemäß der Tabelle geforderten Anforderungen, sind die folgenden:
- Anforderung eins (A1): Zustand "Flashen"
   Jedes der erfindungsgemäßen Steuergerät muss einen Betriebszustand "Flashen" besitzen, in den es nur gelangt, wenn die durch die Safety-Klasse vorgeschriebenen Rahmenbedingungen erfüllt sind. Der Zustand "Flashen" wird ebenfalls nur dann verlassen, wenn die durch die Safety-Klasse vorgeschriebenen Bedingungen erfüllt sind.
- Anforderung zwei (A2): Tester angeschlossen
   Das Steuergerät muss eindeutig feststellen können, ob ein Tester an das interne Fahrzeugnetzwerk angeschlossen ist oder nicht. Diese Information muss bei der Übertragung über das interne Netzwerk derart abgesichert sein, dass eine Verfälschung dieser Information von außen unmöglich ist. Wäre dies nicht der Fall, könnte einem Steuergerät, an das der Tester nicht direkt angeschlossen wird, ein angeschlossener Tester gemeldet werden, ohne dass wirklich ein Tester angeschlossen wäre.
- Anforderung drei (A3): Autarkes Flashen von einer CD
   Das Steuergerät muss in der Lage sein Flashware von einer CD zu lesen und diese korrekt in seinen Flashspeicher zu schreiben. Dabei darf es keine Rolle spielen, ob die CD in einem dem Steuergerät eigenen CD-Laufwerk eingelegt ist oder in dem CD-Laufwerk eines externen Steuergerätes eingelegt ist. In beiden Fällen muss das geflashte Steuergerät in der Lage sein ohne die Verbindung zum Tester selbständig einen Flashprozess durchzuführen.
- Anforderung vier (A4): Flashen über die Luftschnittstelle Das Steuergerät muss in der Lage sein die Flashware, die über die Luftschnittstelle in das Fahrzeug geladen wird, korrekt in seinen Flashspeicher zu schreiben. Ob die Verbindung zur Luftschnittstelle im Gerät selber oder in einem externen Gerät implementiert ist darf dabei keine Rolle spielen. Das Steuergerät muss den Flashvorgang unabhängig von einer Verbindung zum Tester selbständig durchführen können.
- Anforderung fünf (A5): Motor aus
   Das Steuergerät muss über das interne Fahrzeugnetzwerk oder seine eigene Funktion feststellen können, ob der Motor des Fahrzeuges läuft oder nicht. Bei einer Übermittlung dieser Information über das interne Fahrzeugnetzwerk muss diese Kommunikation gegen Manipulation von außen derart gesichert sein, dass hier keine gezielte Fehlinformation von dem Gerät akzeptiert werden darf. Dies ist besonders wichtig in den Safety-Klassen SK2 und SK3, da der Motor in diesen Klassen unter keinen Umständen laufen darf, weil dann die Sicherheit der Insassen gefährdet sein kein. Die Übertragung über das interne Fahrzeugnetzwerk muss an dieser Stelle ausreichend gesichert werden, weil ansonsten die Intension des Safety-Klassen-Konzeptes ausgehebelt würde.
- Anforderung sechs (A6): Zündung aus
   Das Steuergerät muss über das interne Fahrzeugnetzwerk oder seine eigene Funktion feststellen können, ob die Zündung des Fahrzeuges an ist oder nicht. Wird diese Information über das interne Fahrzeugnetzwerk übertragen, so muss diese Übertragung gegen Manipulation von außen gesichert werden, da ansonsten die im Safety-Klassen-Konzept gemachten Festlegungen ausgehebelt werden könnten.
- Anforderung sieben (A7): Verhindern Motor an
   Das Steuergerät muss in der Lage einen Motorstart zu verhindern, solange es noch geflasht wird, und/oder noch kein sicherer Betriebszustand erreicht wurde. Dies ist vor allem für Steuergeräte wichtig, deren Funktionalität kritisch für die Betriebssicherheit des Fahrzeuges ist.
- Anforderung acht (A8): Flashdaten
   Das Steuergerät muss vor einem Flashen bestimmen können, welche Daten im internen Flashspeicher überschrieben werden bzw. welche Bereiche des Flashspeichers neu belegt werden. Dies ist notwendig, damit das Steuergerät die für das Anlegen eines Backups notwendigen Informationen bestimmen kann.
- Anforderung neun (A9): internes Backup
   Das Steuergerät muss ein internes Backup anlegen können. Hierzu muss es zunächst bestimmen können, ob im eigenen Flashspeicher für das interne Backup noch ausreichend Platz zur Verfügung steht. Hierzu benötigt das Steuergerät die Informationen, die aus der Anforderung A8 gewonnen werden. Nur mit der Information, von welchen Daten ein Backup angelegt werden muss bzw. wie viel neuer Speicher durch das Flashen belegt wird, kann das Steuergerät über das Anlegen eines internen Backups entscheiden. Neben der Entscheidung über die Möglichkeit des Anlegens eines internen Backups, muss das Gerät in der Lage sein, ein internes Backup anzulegen und dieses im Fehlerfall auch wieder zurückzuspielen.
- Anforderung zehn (A10): externes Backup
   Das Steuergerät muss in der Lage sein, ein Backup auf einem externen Gerät anzulegen. Hierzu muss es anhand der durch die Anforderung A8 gewonnen Informationen die Daten bestimmen, von denen ein Backup angelegt werden muss. Des weiteren muss ein externes Steuergerät mit ausreichend Ressourcen zur Verfügung stehen, welches das Backup in seinem Speicher anlegen kann. Bei dieser Form des Backups spielt auch die Sicherheit und Fehlertoleranz des internen Fahrzeugnetzwerkes eine Rolle. Nur durch eine sichere und fehlerfreie Übertragung kann garantiert werden, dass das Backup im Fehlerfall wieder zurückgespielt werden kann. Das Steuergerät muss dabei auf die Funktionsfähigkeit des externen Steuergerätes vertrauen und kann nur beschränkt durch eigenen Maßnahmen zum Erfolg des Backups beitragen.
- Anforderung elf (A11): Pufferung der Daten auf einem externen Steuergerät (Zielgerät)
   Das Steuergerät muss feststellen können, ob die Daten auf einem anderen Steuergerät zwischen gespeichert worden sind. Weiterhin muss es feststellen können, ob dieses Steuergerät die notwendigen Prüfungen hinsichtlich Integrität und/oder Authentizität der Programmdaten durchgeführt hat. Erst dann darf das Steuergerät den Download der Flashdaten zulassen. Dabei spielt auch hier die Sicherheit des internen Fahrzeugnetzes eine entscheidende Rolle. Kann sich das Steuergerät nicht auf die Authentizität des zwischenspeichernden Steuergerätes verlassen, darf es den Download in einer der Safety-Klassen (SK2 od. SK4) , die ein Backup vorschreiben, nicht zulassen.
- Anforderung zwölf (A12): Pufferung der Daten auf einem externen Steuergerät (Zwischengerät)
   Das Steuergerät, welches zur Pufferung der Flashdaten zum Download herangezogen wird, muss vor der Weiterleitung der Flashdaten vorgeschriebenen Prüfungen hinsichtlich Authentizität und/oder Integrität an der Flashware vornehmen. Dies bedeutet vor allem, dass für das zwischenspeichernde Steuergerät die gleichen hinsichtlich Authentizität und/oder Integrität gelten, wie für das Zielgerät. Weiterhin müssen dem Zwischengerät auch geheime Informationen, wie zum Beispiel kryptografische Schlüssel, des Zielgerätes bekannt sein. Wäre dies nicht der Fall könnte das Zwischengerät zum Beispiel keine Signaturprüfung durchführen. Auf diese Forderung kann für den Fall verzichtet werden, wenn dem Einspielen der Software in den Zwischenspeicher eine kryptographische Authentisierung einer Zentrale am zwischenspeichernden Steuergerät zwingend vorgeschaltet ist. In diesem Fall kann durch die vorgelagerte Authentisierung von einer vertrauenswürdigen Quelle ausgegangen werden. Ein Test auf technische Übertragungsfehler sollte allerdings trotzdem auf dem zwischenspeichernden Steuergerät vorgesehen'werden, damit ein solcher Fehler nicht zu einem fehlerhaften Flashprozess führen kann, der das geflashte Steuergerät in einen undefinierten Zustand versetzt.
- Anforderung dreizehn (A13): Automatisches Wiedereinspielen eines Backups
   Das Steuergerät muss in der Lage sein im Fehlerfall ein vorher angelegtes Backup automatisiert wieder einzuspielen. Die vorher eingespielten Daten müssen ebenfalls automatisch wieder gelöscht werden.
- Anforderung vierzehn (A14): Löschen eines Backups
   Das Steuergerät auf dem ein Backup angelegt wird, sei es intern, extern oder als Zwischenspeicher, muss in der Lage sein das eingespielte Backup wieder zu löschen. Hierzu bedarf es bei einem erfolgreich durchgeführten Flashvorgang der Information des geflashten Steuergerätes. War ein Flashvorgang nicht erfolgreich, darf das Backup erst nach erfolgreichem Wiedereinspielen in das geflashte Steuergerät gelöscht werden.
- Anforderung fünfzehn (A15): Erkennen des Initialisierungsverfahrens
   Ein Steuergerät muss vor der Durchführung eines Flashvorganges bestimmen können, welches Initialisierungsverfahren die eingespielte Flashware nach der Einspielung benötigt. Anhand dieser Information kann das Steuergerät entscheiden, ob es den Flashvorgang zulassen darf oder nicht.
- Anforderung sechzehn (A16): manuelle Initialisierung
   Bedarf ein Steuergerät nach einem Flashvorgang einer manuellen Initialisierung, müssen die zur Initialisierung notwendigen Schritte dem Flashenden in einer Anzeigekomponente im Fahrzeug ausreichend detailliert dargestellt werden. Dabei kann das Weiterschalten von einem Initialisierungsschritt zum nächsten entweder vom Steuergerät automatisch oder durch manuelle Bestätigung durch den Anwender geschehen. Die Kommunikation zwischen der Anzeigekomponente und dem geflashten Steuergerät muss dabei derart abgesichert sein, dass hier keine fehlerhaften Informationen fehlerhafte Informationen übermittelt, ist auch der Erfolg der manuellen Initialisierung gefährdet. Den Zustand "Flashen" darf dieses Steuergerät erst verlassen, wenn die manuelle Initialisierung vollständig durchgeführt wurde. Der Initialisierungsvorgang muss dementsprechend in den Flashprozess integriert werden.
- Anforderung siebzehn (A17): automatische Initialisierung
   Ein Steuergerät, dass eine automatische Initialisierung bietet, muss diese ohne weiteren Zwischenschritt direkt nach Beendigung des eigentlichen Flashvorganges durchführen. Dabei muss diese Initialisierung auf jeden Fall beendet werden können. So darf z.B. das Ausschalten der Zündung keine Auswirkung auf die Fortführung des Initialisierungsvorganges haben. Den Zustand "Flashen" darf dieses Steuergerät erst verlassen, wenn die automatische Initialisierung vollständig durchgeführt wurde. Der Initialisierungsvorgang muss dementsprechend in den Flashprozess integriert werden.
- Anforderung achtzehn (A18): Anzeige von Fehlermeldungen Kommt es während des Flashprozesses zu Fehlern, so müssen die daraus resultierenden Fehlermeldungen auf einer Anzeigekomponente im Fahrzeug so lange angezeigt werden, bis sie an der Anzeigekomponente durch den Fahrzeugnutzer bestätigt werden. Dabei darf ein vorübergehender Stromausfall oder andere Zustandsänderungen des Steuergerätes die Anzeige der Fehlermeldung nicht beeinflussen. Die Kommunikation zwischen der Anzeigekomponente und dem geflashten Steuergerät muss derart abgesichert sein, dass hier keine fehlerhaften Informationen übermittelt werden können. Ein fehlerhafte Informationsübermittlung kann an dieser Stelle die Information an den Flashenden über den aufgetretenen Fehler unterbinden. Den Zustand "Flashen" darf das Steuergerät erst verlassen, wenn der Fahrzeugnutzer die Fehlermeldung durch eine entsprechende manuelle Handlung bestätigt hat. Das Anzeigen der Fehlermeldung auf der Anzeigekomponente muss dementsprechend in den Flashprozess integriert werden.

### Hierzu 3 Seiten Figuren

### Bezugszeichenliste

- 1: Sicherheitsklasseneinordnung
- 2: Programmdatenspeicher
- 3: Mittel zum Übernehmen von Programmdaten
- 4: Authentizitätsprüfung
- 5: Übergang in Programmdatenübernahmezustand
- 6: Mittel zur Prüfung vorgegebener Programmdatenübernahmesituationen im Steuergerät
- 7: Programmdatenübernahme
- 8: Kontrolle der Programmdatenübernahme durch Tester oder Datenübernahmekontrollzentrale
- 9: Programmdatenübergabestelle
- 10: Datenübernahmekontrollzentrale
- 11: Programmdatenübernahmeanfrage
- 20: Abfrage der Sicherheitsklasseneinordnung
- 31, 32, 33, 34, 35: Programmdatenübernahmesituationen
- 40: Programmdatenweitergabe
- 50: Steuergerät
- 61: Mittel zur Prüfung vorgegebener Programmdatenübernahmesituationen in der Programmdatenübergabestelle
- 101: Prüfung der Programmdatenübernahmesituationen "Kommunikationsverbindung mit Tester oder Datenübernahmekontrollzentrale"
- 102: Prüfung der Programmdatenübernahmesituätionen durch das Steuergerät
- 103: Abfrage der Programmdatenübernahmesituationsprüfungsergebnisse der Programmdatenübergabestelle
- 104: Prüfung der Programmdatenübernahmesituationen durch die Datenübergabestelle

## Patentansprüche

1. Verfahren zum Übernehmen von Programmdaten durch ein Steuergerät in einem Kraftfahrzeug, wobei die Programmdaten von einer Datenübergabestelle bereit gestellt werden, mit den Schritten,
- Abgeben einer Programmdatenübernahmeanfrage an das Steuergerät,
- Übertragen der Programmdaten an das Steuergerät, und
- Übernehmen der Programmdaten durch das Steuergerät,
**dadurch gekennzeichnet, dass** das Steuergerät erst dann in einen Programmdatenübernahmezustand, in welchem die Programmdaten durch das Steuergerät übernommen werden, übergeht, nachdem von dem Steuergerät geprüft wurde, ob für das Steuergerät vorgegebene programmdatenunabhängige Programmdatenübernahmesituationen bestehen.

2. Verfahren nach Anspruch 1
**dadurch gekennzeichnet, dass** von der Datenübergabestelle geprüft wird, ob für das Steuergerät vorgegebene Programmdatenübernahmesituationen bestehen bevor die Programmdaten bereit gestellt werden.

3. Verfahren nach Anspruch 1 und 2
**dadurch gekennzeichnet, dass** das Prüfen durch das Steuergerät, ob die für das Steuergerät vorgegebenen Programmdatenübernahmesituationen bestehen, eine Abfrage des Prüfungsergebnisses der Datenübergabestelle beinhaltet.

4. Verfahren nach mindestens einem der Ansprüche 1 bis 3
**dadurch gekennzeichnet, dass** vom Steuergerät und/oder der Datenübergabestelle, durch Abfrage einer Sicherheitsklasseneinordnung des Steuergerätes, festgestellt wird, welche Programmdatenübernahmesituationen für das Steuergerät bestehen müssen.

5. Verfahren nach mindestens einem der Ansprüche 1 bis 4
**dadurch gekennzeichnet, dass** die Programmdatehübernahmesituationen vom Fahrzeugzustand und/oder dem Datenübertragungsweg und/oder Steuergeräteprogramminitialisierungsmöglichkeiten und/oder Steuergeräteprogrammsicherungsmöglichkeiten und/oder der Art der zu übernehmenden Daten abhängen.

6. Verfahren nach mindestens einem der Ansprüche 1 bis 5
**dadurch gekennzeichnet, dass** als Programmdatenübernahmezustand vom Steuergerät und/oder der Datenübergabestelle geprüft wird, ob der Motor des Kraftfahrzeuges in Betrieb ist und/oder eine Kommunikationsverbindung zwischen dem Steuergerät und einem Tester und/oder einer Datenübernahmekontrollzentrale besteht.

7. Verfahren nach Anspruch 6
**dadurch gekennzeichnet, dass** während sich das Steuergerät im Datenübernahmezustand befindet der Start des Motors des Kraftfahrzeuges vom Steuergerät oder von der . Datenübergabestelle verhindert wird und/oder der Datenübernahmezustand durch das Steuergerät nur nach Empfang eines Datenübernahmebeendigungsbefehls von dem Tester oder der Datenübernahmekontrollzentrale wieder verlassen wird.

8. Verfahren nach mindestens einem der Ansprüche 1 bis 7
**dadurch gekennzeichnet, dass** die Datenübergabestelle die Programmdaten zwischenspeichert bis die vorgegebenen Programmdatenübernahmesituationen des Steuergerätes, für welches die Programmdaten bestimmt sind, bestehen.

9. Verfahren nach mindestens einem der Ansprüche 1 bis 8
**dadurch gekennzeichnet, dass** die Datenübergabestelle als Fahrzeugbauteil ausgeprägt ist, wobei die Datenübergabestelle die Programmdaten von einer externen Quelle übernimmt.

10. Verfahren nach mindestens einem der Ansprüche 1 bis 9
**dadurch gekennzeichnet, dass** ein Authentizitätsprüfen der Programmdaten vom Steuergerät oder von der Datenübergabestelle durchgeführt wird.

11. Verfahren nach Anspruch 10
**dadurch gekennzeichnet, dass** das Authentizitätsprüfen der Programmdaten durch überprüfen einer Signatur mittels eines öffentlichen Schlüssels durchgeführt wird, wobei ein Schlüsselpaar zum Ver- und Entschlüsseln der Programmdaten, bestehend aus einem geheimen und dem öffentlichen Schlüssel verwendet wird und die Programmdaten mit dem geheimen Schlüssel signiert wurden.

12. Steuergerät für eine Komponente eines Kraftfahrzeuges mit,
- Mitteln zum Übernehmen von Programmdaten von einer Datenübergabestelle
**dadurch gekennzeichnet, dass** Mittel zur Überprüfung vorgegebener Programmdatenübernahmesituationen im Steuergerät vorgesehen sind.

13. Datenübergabesystem zur Übertragung von Programmdaten an ein Steuergerät in einem Kraftfahrzeug mit
- einer Datenübergabestelle und
- einem Steuergerät mit Mitteln zum Übernehmen von Programmdaten von der Datenübergabestelle
**dadurch gekennzeichnet, dass** Mittel zur Überprüfung vorgegebener Programmdatenübernahmesituationen im Steuergerät und in der Datenübergabestelle vorgesehen sind, wobei die Mittel zur Überprüfung vorgegebener Programmdatenübernahmesituationen im Steuergerät eingerichtet sind, um die Prüfungsergebnisse, der Überprüfung vorgegebener Programmdatenübernahmesituationen in der Datenübergabestelle, abzufragen.
